# EUROPÄISCHE PATENTSCHRIFT

(11) **EP 1 955 624 B1**
(45) Veröffentlichungstag und Bekanntmachung des Hinweises auf die Patenterteilung: **21.04.2010**
(21) Anmeldenummer: 07002755.2
(22) Anmeldetag: 08.02.2007
(51) Int. Cl.: A47J 31/06, A47J 31/40, A47J 31/42

(54) **Kaffeemaschine**
Coffee machine
Machine à café

(43) Veröffentlichungstag der Anmeldung: 13.08.2008
(73) Patentinhaber: WMF WÜRTTEMBERGISCHE METALLWARENFABRIK AG, 73309 Geislingen/Steige (DE)
(72) Erfinder: Gussmann, Jochen, 73527 Schwäbisch-Gmünd (DE); Krips, Tobias, 89075 Ulm (DE); Weinberger, Ludwig, 89134 Blaustein (DE)
(74) Vertreter: Grünecker, Kinkeldey, Stockmair & Schwanhäusser Anwaltssozietät

(56) Entgegenhaltungen:
- DE-C1- 3 615 158

## Beschreibung

Die Erfindung bezieht sich auf eine Kaffeemaschine der im Oberbegriff von Anspruch 1 erläuterten Art.

Kaffeemaschinen mit einer integrierten oder als Zusatzgerät angebauten Kaffeemahleinrichtung sowie einer im Wesentlichen automatisch ablaufenden Heißwasserzufuhr zur Brüheinrichtung sind in großer Zahl bekannt. Eine dieser Kaffeemaschinen ist beispielsweise in der DE 3615158C1 beschrieben worden. Bei der bekannten Kaffeemaschine wird durch Betätigung eines Mahlwerks Kaffeepulver in eine Brühkammer eingefüllt, die Brühkammer durch einen verschiebbaren Kolben verschlossen, bis ein vorgegebener Anpressdruck des Kolbens auf dem Kaffeepulverkuchen erreicht ist, und dann Brühwasser durchgeleitet. Falls nach wiederholten Zubereitungszyklen festgestellt wird, dass zu wenig oder zuviel Kaffeepulver in die Brühkammer eingefüllt worden ist, wird die Mahldauer des Mahlwerkes unter Wirkung eines programmierbaren Steuergerätes selbsttätig verlängert oder verkürzt. Gleichzeitig oder zusätzlich dazu misst ein Durchfluss-Messglied die Menge des zugeführten Brühwassers und das Steuergerät misst die dafür benötigte Zeit. Wenn diese Zeitdauer von einer vorgegebenen Soll- Zeitdauer in positivem oder negativem Sinn abweicht, wird nach einigen Zubereitungszyklen eine Nachregelung vorgenommen, indem der Mahlgrad des Mahlwerkes selbsttätig auf "feiner" oder "gröber" verstellt wird. Kleinere Abweichungen innerhalb normaler Toleranzen werden dabei in beiden Fällen unberücksichtigt gelassen.

Die bekannte Kaffeemaschine ist als Vollautomat ausgebildet, die dem Benutzer die mit der Zubereitung verschiedener Kaffeearten verbundenen Verrichtungen möglichst erleichtern. Der Kunde muss im Prinzip lediglich eine bestimmte Programmtaste betätigen, um ein gewünschtes Kaffeegetränk zu erhalten. Die Steuerung der Maschine erfolgt nach werksseitig programmierten Parametern, die im Hinblick auf ein optimales Ergebnis für jede bestimmte Getränkeart ausgelegt sind. Diese Parameter werden vorab im Werk durch Geschmacks- und Betriebstests festgelegt. Diese Parameter können beispielsweise umfassen die Menge des eingefüllten Kaffeemehls, den Mahlgrad des Kaffeemehls, den Anpressdruck des Kolbens bei Kolbenbrühern, die Wassermenge und die Auslaufzeit. Die Einhaltung dieser Parameter für jeden Brühvorgang wird selbsttätig überwacht und, bei größeren Abweichungen, selbsttätig korrigiert, ohne dass der Benutzer eingreifen muss.

So ist unter anderem vorgesehen, dass der Mahlgrad des Mahlwerks selbsttätig verändert wird, sobald die Zubereitungszeit eines Getränks von einem zugehörigen Sollwert abweicht.

Der Mahlgrad des gebrühten Kaffeemehls trägt entscheidend zur Kaffeequalität bei. Ist der Mahlgrad zu fein, so kann dies dazu führen, dass der Brühvorgang unzumutbar lange dauert oder gar abbricht, weil der Brüher verstopft. Ist er zu grob, passiert das Brühwasser das Kaffeemehl zu schnell was sich negativ auf den Geschmack des Kaffees auswirkt. Insbesondere zur Zubereitung eines guten Espressos ist eine Mindestkontaktzeit des Brühwassers mit dem Kaffee gewünscht, auch bietet fein gemahlenes Kaffeemehl mehr Kontaktoberfläche mit dem Brühwasser, was zu besserer Extraktion und mehr Aroma führt. Zudem ist es zur Geschmacksentfaltung und Bildung einer gewünschten Crema-Schicht auf dem Espresso erforderlich, dass die verpresste Kaffeemehlschicht der Pumpe einen ausreichenden Widerstand bietet um einen Brühdruck zwischen 6 und 9 bar aufzubauen. Dies wird durch einen feinen Mahlgrad entscheidend begünstigt.

Eine Werkseinstellung auf einen "optimalen" Mahlgrad ist ebenfalls nicht sinnvoll, da bei einer festgelegten Mahlgradeinstellung das Mahlergebnis durch die vielfältig unterschiedliche Konsistenz der eingesetzten Bohnensorten sehr unterschiedlich ausfallen kann. Selbst bei ein und der selben Bohnensorte kann sich der Feinheitsgrad des gemahlenen Kaffees durch unterschiedlichen Röstgrad deutlich unterscheiden.

Eine selbsttätig regelnde Vorrichtung, wie die der bekannten Kaffeemaschine, ist jedoch z.B. für Haushaltsmaschinen zu teuer, da zur Verstellung des Mahlgrads ein eigener Antrieb erforderlich ist. Zudem sind in der Steuerung aufwändige Algorithmen zu hinterlegen, die ein zu empfindliches Regelverhalten verhindern. Auch ist die Methode der Messung der Zubereitungszeit nicht immer geeignet, da die unterschiedlichen Zubereitungsmengen verschiedener Kaffeegetränke keine Berücksichtigung finden oder für jede Zubereitungsmenge ein eigener Sollwert gespeichert werden muss.

Der Erfindung liegt somit die Aufgabe zugrunde, eine Kaffeemaschine bereitzustellen, die dem Kunden eine einfache und preiswerte Möglichkeit bietet, den Mahlgrad des Mahlwerks einer Kaffeemaschine so fein wie möglich auf seine verwendeten Kaffeebohnen einzustellen, ohne Gefahr zu laufen die Brühvorrichtung zu verstopfen.

Die Aufgabe wird durch die im Anspruch 1 angegebenen Merkmale gelöst.

Erfindungsgemäß wurde festgestellt, dass die Durchflussrate des zum Brühen verwendeten Wassers zur Brüheinrichtung ein aussagekräftiges Maß für die gewünschte Kaffeequalität (Extraktgehalt, Geschmack) darstellt. Die Durchflussrate ist ein Maß für die Durchflussgeschwindigkeit des Brühwassers durch das Kaffeemehl und den über dem Kaffeemehl aufgebauten Brühdruck. Sie lässt daher Rückschlüsse auf die Feinheit des Kaffeemehls zu. Die Feinheit des Kaffeemehls ist neben der Kaffeemehlmenge der Parameter, der die Kaffeequalität am deutlichsten beeinflusst.

Der Durchflussmengenmesser ist bevorzugt zwischen der Brühwasserquelle und der Brüheinrichtung angeordnet, wie dies auch bei Kaffeemaschinen ohne die erfindungsgemäße Ausrüstung der Fall ist, so dass keine weiteren konstruktiven Änderungen der Kaffeemaschine notwendig sind.

Die Abhängigkeit der Durchflussrate vom Aromagehalt des Getränks ist jedoch reziprok, d.h. eine hohe Durchflussrate bedeutet ein aromaschwaches Getränk. Darüber hinaus ist nicht jedem Benutzer bewusst, dass ein grober Mahlgrad ein aromaschwaches Getränk ergibt. Demzufolge ist bevorzugt eine Verarbeitungseinrichtung der am Durchflussmengenmesser gewonnenen Messdaten vorgesehen, die diese Messdaten in Anzeigedaten eines Parameters umwandelt, der auch für einen unerfahrenen Benutzer leichter fassbar ist. Mit der Angabe des Brühdrucks wird ein Parameter bereitgestellt, mit dem der Benutzer die tatsächlichen Verhältnisse intuitiv besser realisieren kann, und so beispielsweise einen hohen Brühdruck (bekannt aus einer Espressomaschine) mit einem aromastarken Getränk assoziiert und weiterhin assoziiert, dass ein hoher Brühdruck durch feingemahlenes Kaffeemehl erzeugt wird. Diese Umwandlung der am Durchflussmengenmesser gewonnenen Messdaten in Anzeigedaten des Brühdrucks ist möglich, da der Brühdruck umgekehrt proportional zur Durchflussrate verläuft.

Um die Sicherheit zu erhöhen, ist es bevorzugt, Grenzwerte festzulegen, bis zu denen eine benutzerspezifische Einstellung möglich ist. Dies ist besonders für den Höchstwert des Brühdruckes anzuraten.

Für die Anzeigeeinrichtung bietet sich eine visuelle Anzeige an, die bevorzugt als Balkenanzeige ausgebildet ist.

Der Mahlgrad wird bevorzugt vom Benutzer direkt und manuell eingestellt, wobei eine Einstelleinrichtung für den Mahlgrad vorgesehen ist.

Ein Verfahren gemäß Anspruch 9 zum Betreiben einer Kaffeemaschine umfasst das Feststellen von Messdaten einer Durchflussmenge am Durchflussmengenmesser, das Umwandeln der Messdaten in Anzeigedaten eines Brühdrucks, das Anzeigen der Anzeigedaten an einer Anzeigeeinrichtung in einer durch einen Benutzer feststellbaren Form und das Verändern einer Mahlgradeinstellung der Mahleinrichtung.

Ein Ausführungsbeispiel der Erfindung wird nachfolgend anhand der Zeichnungen näher erläutert. Es zeigen:
- Fig. 1: eine schematische Darstellung einer erfindungsgemäß ausgerüsteten Kaffeemaschine,

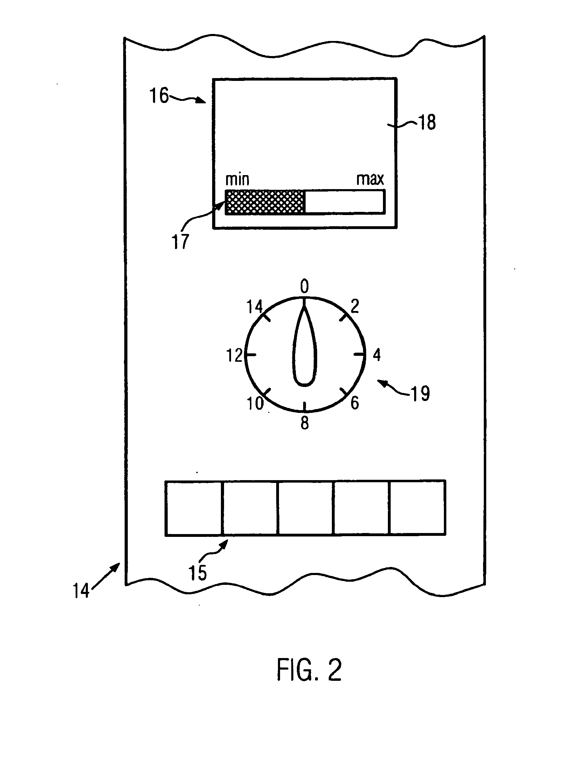

- Fig. 2: ein Teil einer Bedienoberfläche, und
- Fig. 3: ein Diagramm des Zusammenhangs des Drucks am Brühereingang, der Impulse am Durchflussmesser und des Mahlgrades.

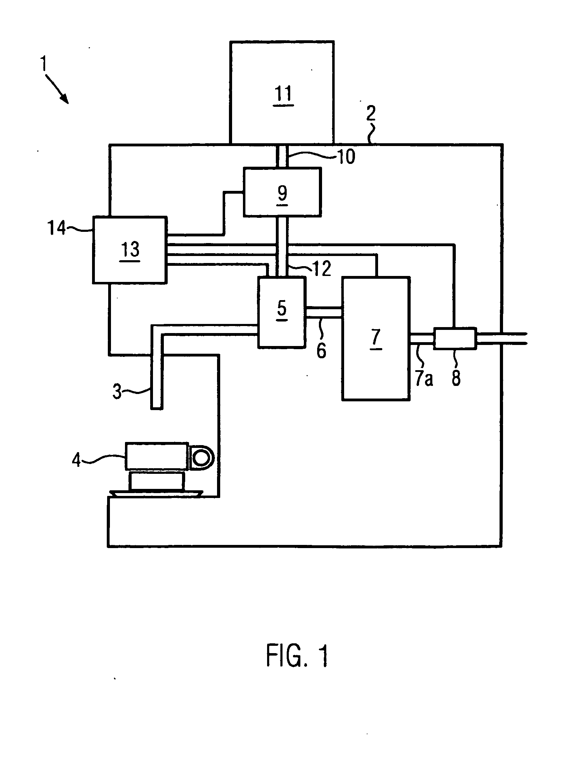

Fig. 1 zeigt in stark schematisierter Darstellung eine erfindungsgemäße Kaffeemaschine 1, bei der nur die für die vorliegende Erfindung zu berücksichtigenden Bauteile gezeigt sind. Die Kaffeemaschine 1 enthält ein Gehäuse 2, aus dem ein Auslauf 3 herausführt, unter den ein Auffanggefäß 4 für ein Getränk, dargestellt ist eine Tasse, gestellt werden kann. Der Auslauf 3 ist mit einer Brüheinrichtung 5 verbunden, die von herkömmlicher Bauart ist und beispielsweise ein Kolbenbrüher sein kann. Die Brüheinrichtung 5 wird über eine Heißwasserleitung 6 von einer Heißwasserquelle 7 mit heißem Brühwasser versorgt. Die Heißwasserquelle 7 kann beispielsweise ein Heißwasserboiler, ein Durchlauferhitzer oder irgendeine andere interne oder externe Heißwasserbereitungseinrichtung sein. Vor der Brüheinrichtung 5 und vor oder nach der Heißwasserquelle 7 ist ein Durchflussmengenmesser 8 angeordnet, der bevorzugt in eine Kaltwasserzuleitung 7a zur Heißwasserquelle 7 eingeschaltet ist. Der Durchflussmengenmesser misst die Durchflussrate des durch ihn hindurch fließenden Wassers, sobald das nicht dargestellte Heißwasserventil zum Einleiten eines Brühvorgangs geöffnet wird.

Mit der Brüheinrichtung 5 ist weiterhin ein Mahlwerk 9 einer Kaffeemahleinrichtung verbunden, das über eine Zufuhrschütte 10 von einem Vorratsbehälter 11, der bevorzugt außen auf dem Gehäuse 2 sitzt, mit Kaffeebohnen versorgt wird und das Kaffeemehl über einen Zufuhrtrichter 12 oder dgl. portionsweise in die Brüheinrichtung 5 einleitet.

Die Kaffeemaschine 1 enthält weiterhin eine Steuerung 13, die unter anderem mit der Brüheinrichtung 5, der Heißwasserquelle 7, dem Durchflussmesser 8 und dem Mahlwerk 9 in Verbindung steht, um nach Anforderung über eine Bedieneinrichtung 14 Getränke, insbesondere Kaffeegetränke, nach werksseitig vorgegebenen oder benutzerspezifizierten Parametern zuzubereiten.

Die Bedieneinrichtung 14 enthält die üblichen Vorwahleinrichtungen 15, mit denen die Getränkeart und/oder die -menge vorgewählt werden kann. Mit der Vorwahleinrichtung 15 kann beispielsweise ein einzelner Espresso, ein doppelter Espresso, zwei Espressi, ein Caffeecreme, eine Tasse Filterkaffee oder dgl. vorgewählt werden.

Die Bedieneinrichtung 14 enthält weiterhin eine Anzeigeeinrichtung 16 mit z. B. einem Display 18 oder dgl., das in üblicher Weise zur Kommunikation mit dem Benutzer eingesetzt wird, und beispielsweise die Vorwahl durch die Vorwahleinrichtung 15 (z.B. "eine Tasse Espresso"), Wartungshinweise (z.B. "Gerät reinigen") oder Betriebszustände (z.B. "Vorwärmphase") oder dgl. anzeigt. Die Anzeigeeinrichtung 16 enthält weiterhin eine Anzeige 17, beispielsweise in Form einer Balkenanzeige, bei der sich ein auffälliger Balken zwischen einem Minimalwert und einem Maximalwert bewegt. Die Anzeige 17 ist repräsentativ für die Durchflussrate am Durchflussmengenmesser 8 und zeigt die Durchflussrate, ausgedrückt als Druck in der Brüheinrichtung 5.

Die Bedieneinrichtung 14 enthält ferner eine Einstelleinrichtung 19 zum Einstellen des Mahlgrades am Mahlwerk 9. Die Einstelleinrichtung 19 ist im dargestellten Ausführungsbeispiel als Drehknopf ausgebildet.

Die verschiedenen Einrichtungen sind nur beispielhaft für eine bessere Erkennbarkeit als Einstellelemente dargestellt; es ist klar, dass die Anzeige- und/oder Einstell- und/oder Vorwähleinrichtungen auch Teil einer eine der üblichen Menüsteuerungen sein kann, durch die der Benutzer geführt wird.

Die Steuerung 13 betreibt die Kaffeemaschine 1 sowohl nach werksseitig vorgegebenen Parametern als auch nach benutzerspezifisch veränderten Parametern. Zu den werksseitig vorgegebenen Parametern gehören beispielsweise die Temperatur des Brühwassers, die Menge des Brühwassers und die Menge des Kaffeemehls für eine bestimmte Vorwahl und dgl.. Der Mahlgrad des Kaffeemehls kann werksseitig auf einen bestimmten Standardwert für jede Vorwahl eingestellt sein, ist jedoch vom Benutzer zu verändern.

Um den Benutzer in die Lage zu versetzen, den Mahlgrad so einzustellen, dass er das gewünschte Ergebnis, d.h. ein schwächeres oder ein stärkeres Kaffeegetränk erreicht, wird die Durchflussrate des Brühwassers am Durchflussmengenmesser 8 festgestellt und in der Anzeige 17 zur Anzeige gebracht. Dabei kann die Durchflussrate direkt angezeigt werden, was jedoch für einen unerfahrenen Benutzer verwirrend ist, da die Durchflussrate und die gewünschte Aromastärke des Getränks reziprok sind, d.h. ein aromastärkeres Getränk eine geringere Durchflussrate erfordert. Bevorzugt enthält die Steuereinrichtung 13 eine Einrichtung zur Verarbeitung der am Durchflussmengenmesser 8 gewonnenen Messdaten, die die Messdaten in Anzeigedaten, bevorzugt des Brühdrucks, umwandelt. Diese Anzeigedaten werden dann in der Anzeige 17 visuell sichtbar gemacht, wobei beispielsweise ein hoher Brühdruck ein aromastarkes Getränk und ein schwacher Brühdruck ein aromaschwaches Getränk repräsentiert. Über die Einstelleinrichtung 19 ist der Benutzer in der Lage, den Mahlgrad in Richtung "grob" oder in Richtung "fein" nach Wunsch zu verändern und somit die Kontaktzeit zwischen dem Kaffeemehl und dem Brühwasser zu verkürzen oder zu verlängem, was sich auf die Stärke, d.h. den Extraktgehalt, des fertigen Getränks auswirkt. Die Verstellung des Mahlgrades erscheint anschließend in der Anzeige 17, wobei sich beispielsweise bei einem feiner eingestellten Mahlgrad der Balken der Anzeige in Richtung "max" und bei gröber eingestelltem Mahlgrad in Richtung "min" verschiebt.

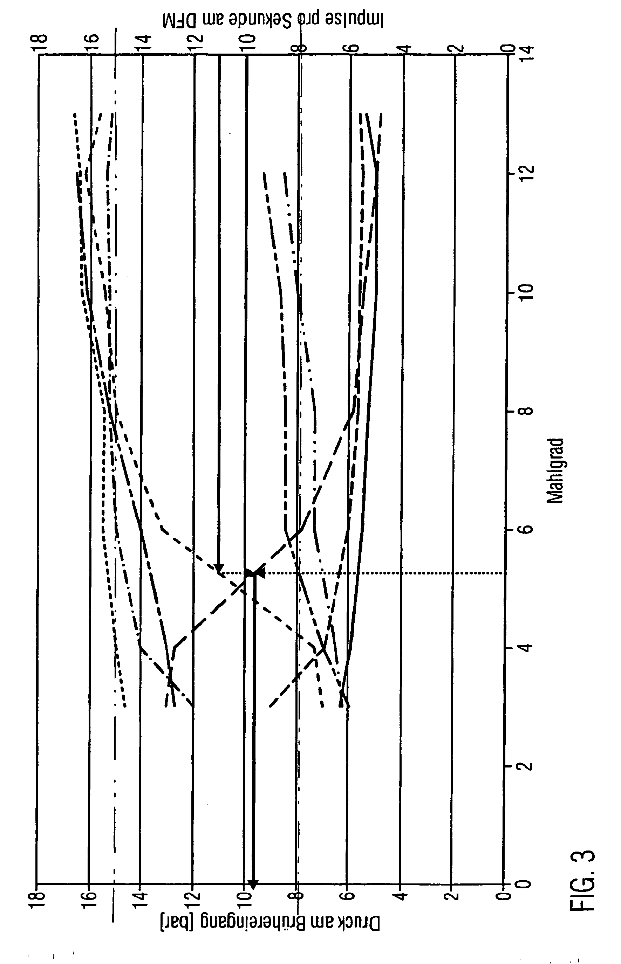

Die Umwandlung der durch den Durchflussmengenmesser 8 gewonnenen Messdaten in die Anzeigedaten des Brühdrucks ist möglich, da der Brühdruck und die Durchflussrate umgekehrt proportional zueinander sind, wie dies Fig. 3 zeigt. Fig. 3 zeigt Kurven des Druckverlaufs, der am Durchflussmengenmesser gemessenen Impulse pro Sekunde und der Mehlmenge für drei verschiedene Getränke nach der nachstehenden Legende, wobei die Zahl der Impulse ein Maß für die Durchflussrate darstellt:

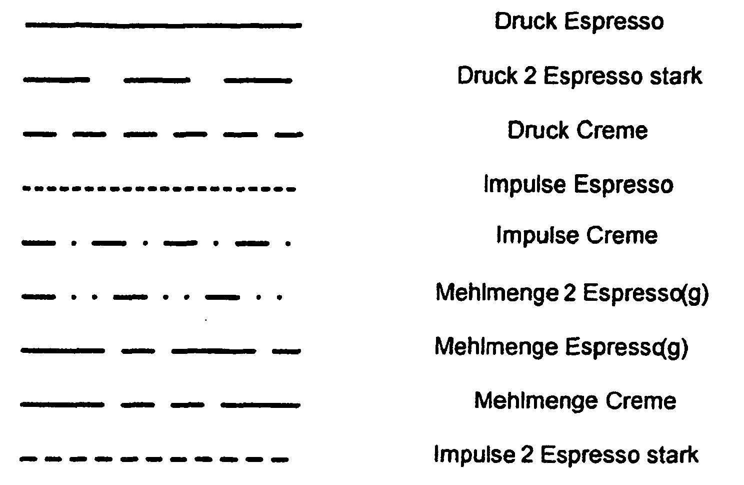

Neben der benutzerspezifisch veränderbaren Getränkequalität (Extraktgehalt) kann die erfindungsgemäße Anzeige der Durchflussrate auch für eine Fehlerbehebung und eine Durchflussüberwachung/Druckoptimierung ausgenutzt werden, wie dies nachfolgend anhand der Zubereitung eines Espresso dargelegt wird:

### Durchflussüberwachung/Dnuckoptimierung Espresso

Aus dem Diagramm der Fig. 3 ist zu erkennen, dass sich der Brühdruck ungefähr umgekehrt proportional zur Durchflussmenge verhält.

Wegen dieses Zusammenhanges kann durch Überwachung der Flussrate ein zu hoher Druck im Brüher und damit eine drohende Verstopfung des Brühers erkannt und verhindert werden.

Die Kontrolle des Brühdruckes erfolgt bei jedem Brühgetränk über Auswertung der Flussrate:

Die Auswertung "Mahlgrad zu grob" sollte nur im Einstellmenü angezeigt werden, nicht jedoch während normalen Getränkebezugs (es kann ja sein, dass ein Kunde bewusst aromaschwachen Kaffee möchte).

### t = 0 sec bis t = 2,5 sec.

Kontrolle, ob überhaupt ein Durchfluss-Impuls (im Weiteren DFI) gezählt wird.

| | |
|---|---|
| Ja = | (Weiter-)brühen |
| Nein = | Abbruch, DF-Fehler |

### t = 2,5sec. bis Brühende:

- Wenn DFI < 8/sec, dann Abbruch Brühung und Anzeige 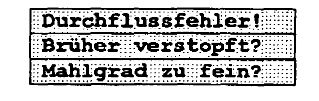
- Wenn DFI < 2/sec, dann Abbruch Brühung und Anzeige 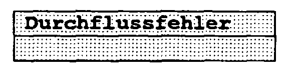
- Wenn DFI < 11/sec aber ≥ 8/sec, dann Brühung weiter bis Ende und Anzeige in Display:

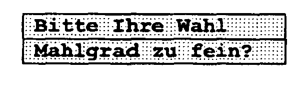

### Einstellschritt "Mahlgrad einstellen"

Im Einstellmenü "Mahlgradeinstellung wählen:

Durchführung einer Brühung mit dem Rezept "2x Espresso, Aroma stark" zur Ermittlung der aktuellen Mahlgrad-/Druckeinstellung Angezeigt wird der Maximalpegel des bisherigen Brühverlaufs nach dem Zeitpunkt t=2,5 sec. Die Anzeige des Maximalpegels wird alle 1 oder 2 Sekunden aktualisiert. Anzeige:

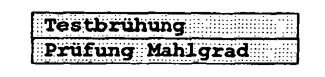

Start der der Testbrühung und Anzeige (Anzeige Zeile 2 gemäß Tabelle):

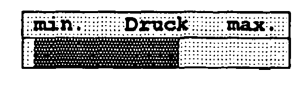

### Definition Pegelanzeige:

Umrechnung DF-Impulse in Pegelanzeige: Min = 16DFI/sec, Max = 11 DFI/sec --> 6 anzuzeigende "Drücke"=Flussratenklassen.

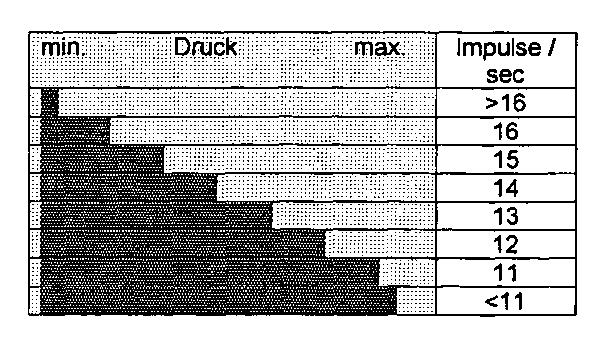

### Wenn < 11 DFI/sec

Anzeige:

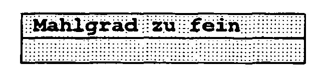

Hinweis, dass Mühle 2 Umdrehungen aufgedreht werden sollte.

### Wenn > 15 DFI/sec

Anzeige:

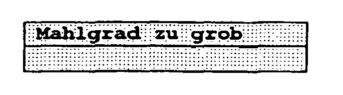

Hinweis, dass Mühle 1 Umdrehung zugedreht werden sollte.

### Wenn ≥ 11 DFI/sec und ≤15

Anzeige:

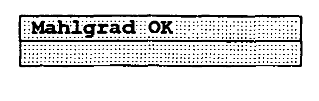

Wie bereits oben erwähnt, wurde der Drehknopf als Einstelleinrichtung für den Mahlgrad nur zum Zwecke der besseren Erläuterung gezeichnet. Die Einstelleinrichtung kann beispielsweise auch in einem Menü enthalten sein, das so ausgebildet ist, dass bei einer Veränderung des Mahlgrades auch gleichzeitig die Anzeige 17 wechselt, so dass der Benutzer bereits während der Einstellung einen Eindruck davon bekommt, wie aromastark oder wie aromaschwach im Verhältnis das bei der nachfolgenden Brühung zu bereitende Getränk wird. Wie oben erwährt, ist insbesondere dann, wenn die Gefahr besteht, dass der Brühdruck zu stark ansteigt, weil das Kaffeemehl zu fein gemahlen ist, ein Grenzwert gesetzt, der zu einem Abbruch der Brühung führt. Im vorliegenden Ausführungsbeispiel wird als Grenzwert eine Durchflussrate von kleiner 8 Impulsen/sec festgelegt.

In Abwandlung des beschriebenen und gezeichneten Ausführungsbeispiels kann die Anzeige der Durchflussrate auch direkt erfolgen, d.h. nicht in die Anzeige des Brühdrucks umgewandelt werden. Anstelle des Brühdrucks können auch andere Anzeigedaten, wie z. B. Geschmacks- oder Aromagrade erzeugt werden. Statt einer Balkenanzeige können die Anzeigedaten auch durch andere Pegel- bzw. Grafikanzeigen sichtbar gemacht werden. Die Erfindung kann auf alle Arten von Kaffeemaschinen und Getränkemaschinen angewandt werden, bei denen das Brühwasser der Brüheinrichtung selbsttätig zugeleitet wird. Auch muss, wie z. B. bei Halbautomaten italienischer Bauart üblich, die Kaffeemahlvorrichtung nicht Bestandteil der Kaffeemaschine sein, sondern kann ein eigenständiges Gerät mit veränderbarem Mahlgrad sein. Der Durchflussmengenmesser kann an jeder geeigneten Stelle vorgesehen sein, z. B. auch in der Heißwasserleitung zwischen Heißwasserquelle und Brüheinrichtung.

## Patentansprüche

1. Kaffeemaschine (1), mit einer Kaffeemahleinrichtung (9), einer Brüheinrichtung (5), einer Brühwasserquelle (7) und einem Durchflussmengenmesser (8), **gekennzeichnet durch** eine Anzeigeeinrichtung (16) zum Anzeigen der am Durchflussmengenmesser (8) festgestellten Durchflussrate.

2. Kaffeemaschine nach Anspruch 1, **gekennzeichnet durch** eine Einrichtung (19) zum benutzerspezifischen Einstellen des Mahlgrades der Kaffeemahleinrichtung (9).

3. Kaffeemaschine nach Anspruch 1 oder 2, **dadurch gekennzeichnet, dass** der Durchflussmengenmesser (8) vor der Brüheinrichtung (5) angeordnet ist.

4. Kaffeemaschine nach einem der Ansprüche 1 bis 3, **gekennzeichnet durch** eine Einrichtung zur Verarbeitung der am Durchflussmengenmesser (8) gewonnenen Messdaten und zum Umwandeln dieser Messdaten in Anzeigedaten, insbesondere des Brühdrucks.

5. Kaffeemaschine nach einem der Ansprüche 1 bis 4, **gekennzeichnet durch** eine Vergleichseinrichtung zum Vergleichen der am Durchflussmengenmesser (8) gewonnenen Messdaten mit wenigstens einem Grenzwert und eine Anzeigeeinrichtung (16) zum Anzeigen einer Grenzwertüberschreitung.

6. Kaffeemaschine nach einem der Ansprüche 1 bis 5, **dadurch gekennzeichnet, dass** die Anzeigeeinrichtung (16) für eine visuelle Anzeige ausgebildet ist.

7. Kaffeemaschine nach einem der Ansprüche 1 bis 6, **dadurch gekennzeichnet, dass** die Anzeigeeinrichtung (16) eine Pegelanzeige, insbesondere eine Balkenanzeige (17) enthält.

8. Kaffeemaschine nach einem der Ansprüche 1 bis 7, **dadurch gekennzeichnet, dass** die Mahleinrichtung (9) eine manuell zu betätigenden Einstelleinrichtung (19) für den Mahlgrad aufweist.

9. Verfahren zum Betreiben einer Kaffeemaschine (1) mit einer Mahleinrichtung (9), einer Brüheinrichtung (5), einer Brühwasserquelle (7) und einem Durchflussmengenmesser (8), **gekennzeichnet durch** die folgenden Schritte:
- Feststellen von Messdaten einer Durchflussmenge am Durchflussmengenmesser (8);
- Umwandeln der Messdaten in Anzeigedaten;
- Anzeigen der Anzeigedaten an einer Anzeigeeinrichtung (16) in einer **durch** einen Benutzer feststellbaren Form;
- Verändern einer Mahlgradeinstellung der Mahleinrichtung (9) **durch** den Benutzer.

## Claims

1. Coffee machine (1), with a coffee grinding device (9), a brewing device (5), a brewing water source (7) and a flowmeter (8), **characterised by** a display device (16) for displaying the flow rate determined by the flowmeter (8).

2. Coffee machine according to Claim 1, **characterised by** a device (19) for the user-specific setting of the grinding grade of the coffee grinding device (9).

3. Coffee machine according to Claim 1 or 2, **characterised in that** the flowmeter (8) is arranged before the brewing device (5).

4. Coffee machine according to one of the Claims 1 to 3, **characterised by** a device for the processing of measurement data obtained by the flowmeter (8) and for the conversion of these measurement data into display data, in particular of the brewing pressure.

5. Coffee machine according to one of the Claims 1 to 4, **characterised by** a comparator device for comparing the measurement data obtained by the flowmeter (8) with at least one limit and a display device (16) for displaying an infringement of the limit.

6. Coffee machine according to one of the Claims 1 to 5, **characterised in that** the display device (16) is formed for a visual display.

7. Coffee machine according to one of the Claims 1 to 6, **characterised in that** the display device (16) includes a level display, in particular a bar indicator (17).

8. Coffee machine according to one of the Claims 1 to 7, **characterised in that** the grinding device (9) has a setting device (19) for the grinding grade that can be actuated manually.

9. Method of operating a coffee machine (1) with a grinding device (9), a brewing device (5), a brewing water source (7) and a flowmeter (8), **characterised by** the following steps:
- Acquisition of measurement data of a flow rate on the flowmeter (8);
- Conversion of the measurement data into display data;
- Display of the display data on a display device (16) in a form identifiable by the user;
- Changing of a grinding grade setting on the grinding device (9) by the user.

## Revendications

1. Machine à café (1) avec un dispositif à moudre le café (9), un dispositif d'infusion (5), une source d'eau d'infusion (7) et un débitmètre (8), **caractérisée par** un dispositif d' affichage (16) pour l'affichage du débit constaté sur le débitmètre (8).

2. Machine à café selon la revendication 1, **caractérisée par** un dispositif (19) pour le réglage spécifique à l'utilisateur du degré de mouture du dispositif à moudre le café (9).

3. Machine à café selon la revendication 1 ou 2, **caractérisée en ce que** le débitmètre (8) est disposé en amont du dispositif d'infusion (5).

4. Machine à café selon l'une quelconque des revendications 1 à 3, **caractérisée par** un dispositif de traitement des données de mesure obtenues sur le débitmètre (8) et de conversion de ces données de mesure en données d'affichage, en particulier de la pression d'infusion.

5. Machine à café selon l'une quelconque des revendications 1 à 4, **caractérisée par** un dispositif de comparaison pour la comparaison des données de mesure obtenues sur le débitmètre (8) avec au moins une valeur limite et un dispositif d'affichage (16) pour l'affichage d'un dépassement de valeur limite.

6. Machine à café selon l'une quelconque des revendications 1 à 5, **caractérisée en ce que** le dispositif d'affichage (16) est réalisé pour un affichage visuel.

7. Machine à café selon l'une quelconque des revendications 1 à 6, **caractérisée en ce que** le dispositif d'affichage (16) contient un affichage de niveau, en particulier un affichage à barre (17).

8. Machine à café selon l'une quelconque des revendications 1 à 7, **caractérisée en ce que** le dispositif à moudre (9) présente un dispositif de réglage (19) à actionner manuellement pour le degré de mouture.

9. Procédé de fonctionnement d'une machine à café (1) avec un dispositif à moudre (9), un dispositif d'infusion (5), une source d'eau d'infusion (7) et un débitmètre (8), **caractérisé par** les étapes suivantes consistant à :
- constater les données de mesure d'un débit sur le débitmètre (8) ;
- convertir les données de mesure en données d'affichage ;
- afficher les données d'affichage sur un dispositif d'affichage (16) sous une forme pouvant être constatée par un utilisateur ;
- modifier un réglage de degré de mouture du dispositif à moudre (9) par l'utilisateur.
